Europäisches Patentamt

European Patent Office

Office européen des brevets

(11) Veröffentlichungsnummer: **0 383 398**
**A2**

# (12) EUROPÄISCHE PATENTANMELDUNG

(21) Anmeldenummer: 90200327.6

(22) Anmeldetag: 13.02.90

(51) Int. Cl.⁵: **H04N 1/40**

(30) Priorität: 17.02.89 DE 3904809

(43) Veröffentlichungstag der Anmeldung:
**22.08.90 Patentblatt 90/34**

(84) Benannte Vertragsstaaten:
**DE FR GB IT NL**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT NL**

(72) Erfinder: **Behrmann-Poitiers, Jens, Dr.**
**Tunnkoppelstieg 23**
**D-2000 Hamburg 67(DE)**

(74) Vertreter: **Poddig, Dieter, Dipl.-Ing. et al**
**Philips Patentverwaltung GmbH**
**Wendenstrasse 35 Postfach 10 51 49**
**D-2000 Hamburg 1(DE)**

(54) Verfahren zum Verkleinern eines Musters sowie Anordnung zur Durchführung des Verfahrens.

(57) Zur Umwandlung eines Musters, das aus einer Matrix von binären Musterelementen besteht und insbesondere ein Pseudo-Halbtonbild darstellt, in ein kleineres Pseudo-Halbtonbild wird das zu verkleinernde Bild in Felder eingeteilt, und die Bildpunkte mit dem einen binären Wert in jedem Feld werden gezählt, wodurch ein verkleinertes, quasi echtes Grautonbild entsteht. Dieses Grautonbild wird mit Gewichten einer wiederholt angewendeten Gewichtsmatrix verglichen, und die Vergleichsergebnisse ergeben dann die binären Bildpunkte des verkleinerten Pseudo-Halbtonbildes. Eine weitere Verkleinerung wird dadurch erreicht, daß in regelmäßigen Abständen aus den Feldern der Matrix des zu verkleinernden Bildes bzw. aus den Bildpunkten des zwischendurch erzeugten Grautonbildes Felder bzw. Grautonbildpunkte weggelassen werden.

Fig.1

## Verfahren zum Verkleinern eines Musters sowie Anordnung zur Durchführung des Verfahrens

Die Erfindung betrifft ein Verfahren zur Umwandlung eines ersten Musters, das aus einer ersten Matrix von binären Musterelementen besteht, in ein zweites Muster mit geringerer Auflösung in Form einer zweiten Matrix mit weniger binären Musterelementen als die erste Matrix, wobei die erste Matrix in aneinandergrenzende Felder unterteilt wird und die Anzahl Musterelemente des einen binären Werts in jedem Feld gezählt und jeder Zählwert mit einem Schwellwert verglichen wird, sowie eine Anordnung zur Durchführung des Verfahrens.

Ein derartiges Verfahren ist aus der US-PS 36 76 982 bekannt, wobei das erste Muster durch ein Pseudo-Haltonbild gebildet wird und das zweite Muster ein verkleinertes Pseudo-Halbtonbild ist. Darin sind die Felder, in die die erste Matrix unterteilt wird, quadratisch, und die Anzahl der Bildpunkte mit dem binären Wert "1" in jedem Feld wird gezählt, und dieser Zählwert wird mit einem festen Schwellwert verglichen, der gleich der Hälfte der Bildpunkte je Feld ist. Die Vergleichsergebnisse liefern das verkleinerte Bild, in dem jeweils ein Bildpunkt einem Feld der ersten matrix entspricht. Durch den Vergleich mit einem festen Schwellwert kann es jedoch leicht geschehen, daß das verkleinerte Bild völlig unbrauchbar wird. Wenn nämlich eine Anzahl benachbarter Felder einen Pseudo-Grautonwert wiedergeben sollen, der etwas dunkler als der Mittelwert ist, haben in jedem Feld mehr als die Hälfte der Bildpunkte den binären Wert "1", und im verkleinerten Bild erscheint dafür jeweils ein schwarzer Punkt. Mehrere solcher benachbarter Felder mit nahezu mittlerem Grauton erscheinen also im verkleinerten Bild als völlig schwarzer Bereich. Entsprechendes gilt, wenn mehrere benachbarte Felder einen Grauton repräsentieren, der etwas über dem Mittelwert liegt, und im verkleinerten Bild weiß erscheinen.

Aufgabe der Erfindung ist es daher, ein Verfahren der eingangs genannten Art anzugeben, mit dem verkleinerte Muster erzeugt werden können, bei denen die mittlere Verteilung der Werte der Musterelemente des Originalmusters weitgehend zutreffend abgebildet wird.

Diese Aufgabe wird erfindungsgemäß dadurch gelöst,die Schwellwerte für jeweils eine erste Anzahl benachbarter Felder unterschiedlich sind.

Durch die Verwendung unterschiedlicher Schwellwerte wird erreicht, daß ein erstes Muster mit annähernd gleicher Verteilung der binären Werte der Musterelemente im zweiten Muster ebenfalls eine annähernd gleiche Verteilung der binären Werte ergibt, so daß praktisch keine Verfälschung entsteht. Wenn das erste Muster ein Pseudo-Grautonbild ist, geben die aus dem ersten Muster gewonnenen Zählwerte ein verkleinertes Grautonbild an, in dem der Grauton jedes Bildelements durch eine Mehrbit-Zahl entsprechend dem Zählwert dargestellt wird, und dieser verkleinerte Grautonbild wird dann mit üblichen Verfahren, beispielsweise mit dem Ordered-Dither-Verfahren in ein Pseudo-Halbtonbild umgesetzt. Dadurch bleiben also die Grautonwerte des originalen Bildes weitgehend erhalten.

Wenn das erste Muster ein Pseudo-Halbtonbild ist, das in entsprechender Weise, d.h. mit Hilfe einer Matrix von Schwellwerten, erzeugt worden ist, ist es zweckmäßig, daß die Größe der Felder gleich der Größe dieser Schwellwert matrix gewählt wird. Das dabei entstehende verkleinerte Bild kann jedoch noch größer als gewünscht sein. In diesem Falle ist es zweckmäßig, daß nach einer Ausgestaltung der Erfindung aus der ersten Anzahl Felder eine zweite Anzahl kleiner als die erste Anzahl Zwischenwerte gebildet werden und daß das zweite Muster aus den zweiten Zwischenwerten gebildet wird. Dies könnte beispielsweise durch Mittelwertbildung geschehen, was jedoch einen merklichen Rechenaufwand erfordert. Eine einfachere Möglichkeit, die ebenfalls weitgehend originalgetreue verkleinerte Bilder ergibt, ist nach einer weiteren Ausgestaltung der Erfindung dadurch gekennzeichnet, daß jeder Zwischenwert aus einem der ersten Zählwerte gemäß einer vorgegebenen Folge der Felder ausgewählt wird. Die Auswahlfolge, in einfachsten Fällen beispielsweise in Zeilen- und Spaltenrichtung jeder n-te Zwischenwert, läßt sich durch eine sehr einfache Adressensteuerung erhalten.

Eine Anordnung zur Durchführung des erfindungsgemäßen Verfahrens mit einem Zähler, der die Anzahl Musterelemente des einen Werts für jeweils ein Feld der ersten Matrix zählt und dabei einen Zählwert bildet, und mit einem Vergleicher, der jeden Zählwert mit einem Schwellwert vergleicht gemäß der US-PS 36 76 982, ist erfindungsgemäß dadurch gekennzeichnet, daß ein Schwellwert-Speicher zur Speicherung der unterschiedlichen Schwellwerte und eine Adressiervorrichtung vorgesehen sind, die für jeden Zählwert jeweils der ersten Anzahl benachbarter Felder einen anderen Schwellwert aus dem Schwellwertspeicher ausliest und dem Vergleicher zuführt. Durch die Anwendung eines Schwellwert-Speichers mit entsprechender Adressierung kann sehr einfach aus den in bekannter Weise erzeugten Zählwerten ein weitgehend originalgetreues verkleinertes Muster erzeugt werden.

Eine besonders einfache Ausführung der Steuerung für die Erzeugung des verkleinerten Pseudo-Halbtonbildes ist nach einer Ausgestaltung der erfindungsgemäßen Anordnung dadurch gekennzeichnet, daß ein Zwischenspeicher vorgesehen ist, der alle Zählwerte aufnimmt, und daß die Adressiervorrichtung außerdem die Zählwerte jeweils der ersten Anzahl benachbarter Felder im Zwischenspeicher adressiert und dem Vergleicher zuführt. Dabei kann die Adressiervorrichtung die einzelnen Zählwerte in einer natürlichen Folge nacheinander abarbeiten und dabei auch gleichzeitig die Ausgabe des verkleinerten Bildes bzw. einen Speicher dafür adressieren. Im Falle einer zusätzlichen Verkleinerung ist es dabei zweckmäßig, daß die Adressiervorrichtung nur einen Teil der Zwischenwerte adressiert und dem Vergleicher zuführt. Wenn beispielsweise nur die Zählwerte jeder zweiten Zeile und jeder zweiten Spalte verwendet werden, kann dies leicht beispielsweise durch Übergehen einzelner Ausgänge eines Binärzählers als Adressiervorrichtung geschehen.

Eine andere Möglichkeit, die besonders wenig Aufwand insbesondere auch beim stärkeren Verkleinern durch Auslassen von Zählwerten erfordert, ist dadurch gekennzeichnet, daß die Adressiervorrichtung außerdem die Zufuhr der Musterelementwerte der ersten Matrix zum Zähler steuert und der Ausgang des Zählers direkt mit dem Vergleicher gekoppelt ist. Dabei ist die Adressierfolge zwar etwas komplizierter, jedoch braucht sie für einen vorgegebenen Verkleinerungsmaßstab nur ein einziges Mal für alle Bilder festgelegt zu werden, und der Zwischenspeicher entfällt.

Ausführungsbeispiele der Erfindung werden nachstehend anhand der Zeichnung näher erläutert. Es zeigen:

Fig. 1 die Vorgänge beim erfindungsgemäßen Verfahren anhand von Bild-, Zwischenwert- und Gewichtsmatrizen,

Fig. 2 das Prinzip der weiteren Verkleinerung durch Auswahl einzelner Zwischenwerte,

Fig. 3 eine Möglichkeit zur direkten Umsetzung des Original-Pseudo-Halbtonbildes in eine reduzierte Grauwertmatrix,

Fig. 4 eine erste Ausführung einer erfindungsgemäßen Anordnung mit einem Zwischenspeicher,

Fig. 5 ein geändertes Detail dieser Anordnung zum Überspringen einzelner Zwischenwerte,

Fig. 6 ein Blockschaltbild einer erfindungsgemäßen Anordnung ohne Zwischenspeicher.

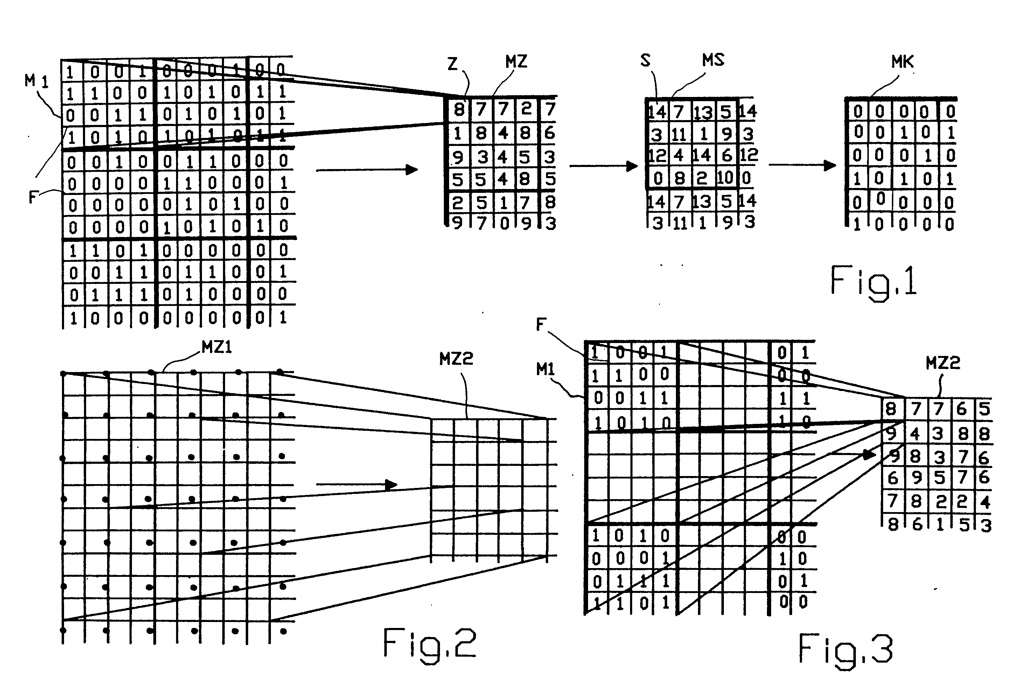

In Fig. 1 ist die Matrix M1 des originalen PseudoHalbtonbildes, von dem eine möglichst naturgetreue verkleinerte Wiedergabe erzeugt werden soll, in eine Anzahle benachbarter quadratischer Felder F eingeteilt, die durch dickere Linien abgegrenzt sind. Jedes Feld F umfaßt 4x4 binäre Bildpunkte, die also den Wert "0" oder "1" haben. In diesem Beispiel werden nun die Bildpunkte mit dem Wert "1" in jedem Feld gezählt, und die Zählwerte Z sind für benachbarte Felder in einer Matrix MZ angeordnet.

Jeweils eine Anzahl derartiger Zählwerte Z, in diesem Beispiel ebenfalls eine Teilmatrix von 4x4 Zählwerten, wird mit unterschiedlichen Schwellwerten S verglichen, die hier in einer Schwellwertmatrix MS angeordnet sind, die die gleichen Abmessungen wie die Teilmatrix der Anzahl Zählwerte hat. Wenn der Zählwert Z kleiner ist als der zugehörige Schwellwert oder gleich diesem, wird an dieser Stelle in der Matrix MK des gewünschten verkleinerten Bildes ein Bildpunkt mit dem Wert "0" eingesetzt, und wenn der Zählwert Z größer ist als der Schwellwert S, wird ein Bildpunkt mit dem Wert "1" eingefügt. Die Schwellwertmatrix MS wird wiederholt auf die Zählwerte Z benachbarter Teilmatrizen in der Matrix MZ der Zählwerte angewendet, was einer spaltenweisen Wiederholung der Schwellwertmatrix MS entspricht, wie in Fig. 1 angedeutet ist. Tatsächlich braucht die Schwellwertmatrix MS nur einmal gespeichert zu sein. Auf diese Weise entsteht schließlich die vollständige Matrix MK der binären Bildpunkte des gewünschten verkleinerten Bildes, die dann vorzugsweise mit einer Punktdruckanordnung ausgedruckt wird.

In manchen Fällen ist das verkleinerte Bild gemäß der Matrix MK noch zu groß, da aus den Bildpunkten jeweils eines Feldes F ein Bildpunkt der Matrix MK erzeugt wird, so daß die Größe des Feldes F den Verkleinerungsmaßstab bestimmt. Für eine stärkere Verkleinerung könnte die Größe der Felder F, d.h. die Anzahl der Bildpunkte darin, vergrößert werden. Es hat sich jedoch herausgestellt, daß dadurch die Struktur des ursprünglichen Bildes zu sehr verschmiert wird, so daß das verkleinerte Bild dem Original nicht so gut entspricht. Für eine stärkere Bildverkleinerung ist es daher günstiger, im Prinzip von der Matrix MZ der Zählwerte Z auszugehen und daraus eine kleinere Matrix Zwischenwerte zu erzeugen. Dies ist in Fig. 2 angedeutet. Darin ist eine Matrix MZ1 von Zählwerten angedeutet, die der Matrix MZ in Fig. 1 entspricht. Diese Matrix soll auf eine andere Matrix abgebildet werden, die in Form von Punkten über der Matrix MZ angedeutet ist, wobei diese Punkte beispielsweise die Kreuzungspunkte der Zeilen und Spalten andeuten. Wie zu erkennen ist, hat diese zweite Matrix nicht ganz die doppelte Größe der Elemente wie die Matrix MZ1. In der linken oberen Ecke fallen die beiden Matrizen aufeinander. Jedes Matrixelement der gröberen Matrix wird nun dadurch erhalten, daß der Wert des nächstliegenden Matrixelements der ersten Matrix MZ1 auf der Basis des euklidischen Abstandes verwendet wird. Ist ein derartiges Element der ersten Matrix MZ1 nicht eindeutig bestimmbar, so bestimmt eine beliebige, fest vorgewählte Anordnung aus den zwei oder vier möglichen Nachbarelementen das auszuwählende Element. Auf diese Weise wird also die Matrix MZ1 mit Zählwerten auf eine Matrix MZ2 mit Zwischenwerten abgebildet, wie in Fig. 2 angegeben ist.

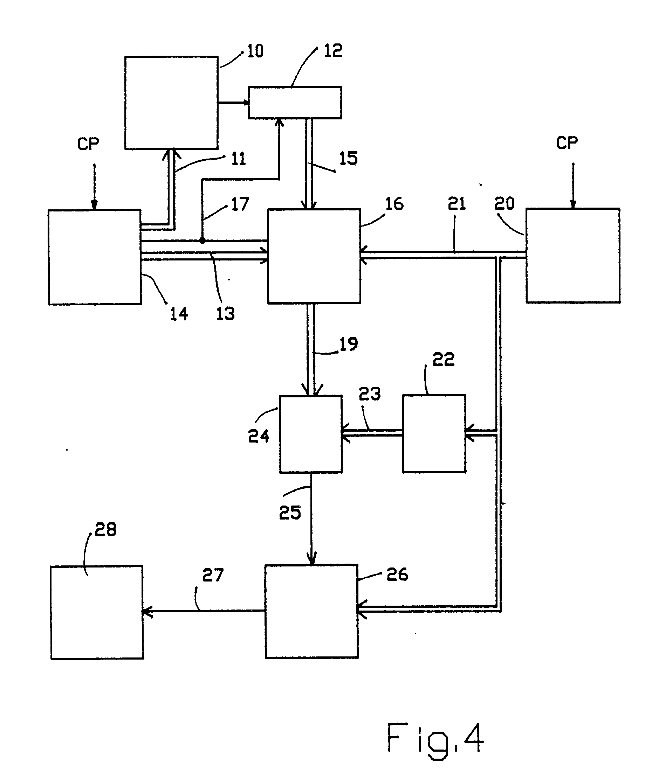

Es ist jedoch auch möglich, den Zwischenschritt zur Bildung der Matrix MZ1 der Zählwerte zu überspringen und direkt aus der Matrix M1 des ursprünglichen Bildes die Matrix MZ2 der Zwischenwerte zu ermitteln. Dafür werden nur diejenigen Felder bzw. Bildpunkte in diesen Feldern ausgewählt, die dem nach Fig. 2 auszuwählenden Matrixelement der Matrix MZ1 der Zählwerte entspricht. Dies ist in Fig. 3 dargestellt, wo in Zeilen- und Spaltenrichtung jeweils nur jedes zweite Feld für die Erzeugung des Werts eines Zählwertes in der Matrix MZ2 verwendet wird. Dies erfordert weniger Rechenaufwand, jedoch einen etwas erhöhten Adressierungsaufwand, der insbesondere bei konstanten Verkleinerungsfaktoren jedoch praktisch nicht ins Gewicht fällt.

Eine Anordnung zur Durchführung der einzelnen Verarbeitungsschritte gemäß Fig. 1 ist in Fig. 4 als Blockschaltbild dargestellt. Es wird angenommen, daß die binären Bildpunkte des zu verkleinernden Pseudo-Halbtonbildes im Speicher 10 gespeichert sind. Von einer Adressieranordnung 14, die von einem Taktsignal CP gesteuert wird, werden jeweils nacheinander über die mehradrige Verbindung 11 die Adressen der Bildpunkte eines Feldes erzeugt und die Bildpunktwerte einem Zähler 12 zugeführt. Jeder Bildpunkt mit dem Wert "1" schaltet die Stellung des Zählers 12 um einen Schritt weiter. Die Zählerstellung wird über die ebenfalls aus mehreren parallelen Leitungen bestehende Verbindung 15 dem Dateneingang eines Zwischenwertspeichers 16 zugeführt.

Nach jeweils der Adressierung aller Bildpunkte eines Feldes im Speicher 10 erzeugt die Adressieranordnung 14 auf der Leitung 17 ein Signal, das die über die Verbindung 15 zugeführte Zählerstellung in den Zwischenwertspeicher 16 an einer Adresse einschreibt, die diesem Speicher über die Verbindung 13 von der Adressieranordnung 14 zugeführt wird. Unmittelbar danach wird durch das Signal auf der Leitung 17 der Zähler 12 auf eine Anfangsstellung, vorzugsweise die Nullstellung, zurückgesetzt, und die Adressieranordnung 14 erzeugt die Adressen für die Bildpunkte des nächsten Feldes im Speicher 10. Auf diese Weise werden nacheinander alle Zählwerte in den Zwischenwertspeicher 16 eingeschrieben. Dessen Inhalt stellt praktisch ein verkleinertes Grauton-Zwischenbild des im Speicher 10 enthaltenen Pseudo-Halbtonbildes dar.

Danach wird der Zwischenwertspeicher 16 von einer weiteren Adressieranordnung 20, die ebenfalls vom Taktsignal CP gesteuert wird, über die ebenfalls mehradrige Verbindung 21 adressiert, und es werden nacheinander die darin enthaltenen Zählwerte ausgelesen und über die Verbindung 19 abgegeben. Grundsätzlich könnten die Adressieranordnungen 14 und 20 zu einer einzigen Adressiervorrichtung zusammengefaßt werden, jedoch sind hier aus Gründen der Übersichtlichkeit zwei getrennte Adressieranordnungen dargestellt.

Ferner wird über die Verbindung 21 bzw. über zumindest einige Leitungen davon ein Schwellwertspeicher 22 adressiert, der an einzelnen Adressen unterschiedliche Schwellwerte enthält. Der adressierte Schwellwert wird über die Verbindung 23 dem einen Eingang eines Vergleichers 24 zugeführt, der am anderen Eingang über die Verbindung 19 die aus dem Zwischenwertspeicher ausgelesenen Zählwerte enthält. Abhängig davon, ob der Wert auf der Verbindung 19 oder der Verbindung 23 größer ist, erzeugt der Vergleicher 24 am Ausgang 25 ein binäres Signal, das in diesem Beispiel in einen Ausgangsspeicher 26 eingeschrieben wird, der nach dem Verarbeiten aller Zählwerte des Zwischenwertspeichers 16 das verkleinerte Pseudo-Halbtonbild enthält. Dieses kann dann über die Leitung 27 beispielsweise an einen Drucker 28 mit punktweisem Druck (z.B. Matrixdrucker) ausgegeben werden.

Der Schwellwertspeicher 22 enthält nur eine geringe Anzahl von Schwellwerten, beispielsweise 4x4 Schwellwerte, und damit wesentlich weniger als der Zwischenwertspeicher 16 Zählwerte enthält. Der Inhalt des Schwellwertspeichers 22 wird somit also bei einem einmaligen Auslesen des Zwischenwertspeichers 16 mehrmals durchlaufen, was leicht dadurch erreicht werden kann, daß nur die Adressenleitungen bestimmter Wertigkeiten mit dem Adresseneingang des Schwellwertspeichers 22 verbunden sind.

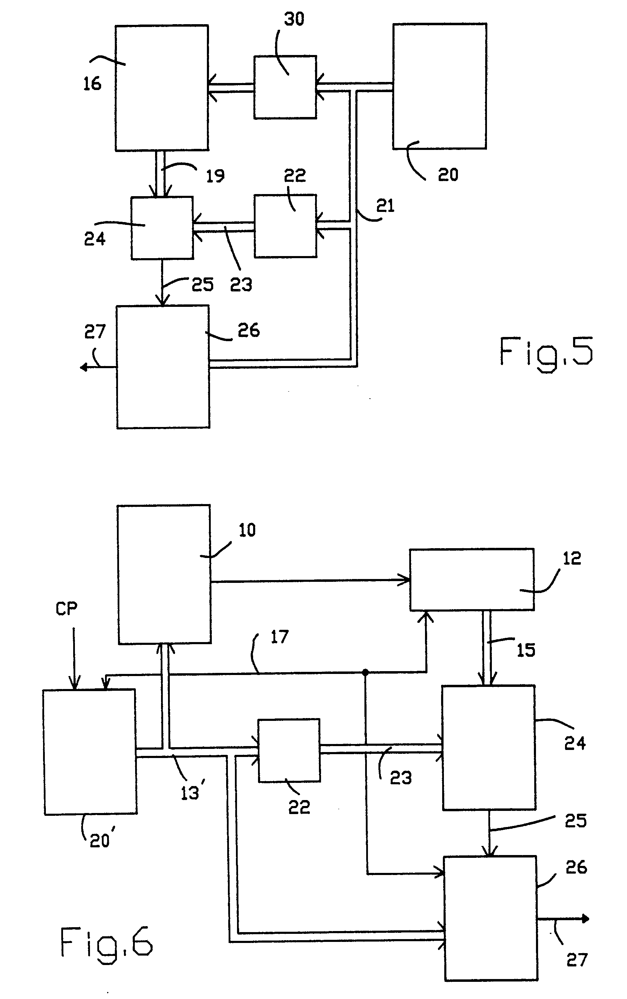

Wie bereits anhand der Fig. 2 erwähnt, wird eine vielfach erwünschte weitere Verkleinerung des schließlich erzeugten Bildes dadurch erreicht, daß nur ein Teil der Zählwerte weiterverarbeitet wird. Die Auswahl dieser Zählwerte aus dem Zwischenwertspeicher 16 wird durch eine Erweiterung der in Fig. 4 angegebenen Anordnung erreicht, die in Fig. 5 dargestellt ist. Danach wird der Zwischenwertspeicher 16 nicht direkt von der Adressieranordnung 20 adressiert, sondern über einen Adressenzuordner 30, der zu jeder von der Adressieranordnung 20 erzeugten Adresse die Adresse des auszuwählenden Zählwertes bildet. Für besonders einfache zusätzliche Verkleinerungsmaßstäbe, beispielsweise eine Verkleinerung auf 1/2, wo also nur die Zählwerte jeder zweiten Spalte und Zeile der Zwischenwertmatrix ausgelesen werden, wird durch den Adressenzuordner 30 lediglich die Adressenleitung bzw. Adressenleitungen entsprechender Wertigkeit auf einem festen Potential gehalten. Für andere Verkleinerungsmaßstäbe kann der Adressenzuordner 30 beispielsweise durch einen Festwertspeicher mit entsprechendem Inhalt gebildet werden. Die Adressierung des Schwellwertspeichers 22 und des Ausgangsspeichers 26 für das verkleinerte Pseudo-Halbtonbild erfolgt wie bei der Anordnung nach Fig. 4. Letzteres wird wieder über die Leitung 27 der nicht dargestellten Ausgabeanordnung zugeführt.

Eine Anordnung zur Erzeugung eines verkleinerten Pseudo-Halbtonbildes, die ohne Zwischenspeicher auskommt, ist in Fig. 6 als Blockschaltbild dargestellt. Darin sind Elemente, die denen der Anordnung nach Fig. 4 entsprechen, mit den gleichen Bezugzeichen dargestellt. Die Bildpunkte des zu verkleinernden Pseudo-Halbtonbildes sind wieder im Speicher 10 gespeichert, der hier von einer Adressieranordnung 20' über die mehradrige Verbindung 13' adressiert wird. Wenn die Matrix dieser Bildpunkte in quadratische Felder mit einer Anzahl von jeweils einer geraden Potenz von zwei Bildpunkten eingeteilt wird, kann die Adressierung so erfolgen, daß bei den über die Verbindung 13' zugeführten Adressen einige Bits nur die Bildpunkte innerhalb jeweils eines Feldes und die übrigen Bits die Felder nacheinander adressieren. Die letzteren Bits auf der Verbindung 13' werden dann zur Adressierung des Ausgangsspeichers 26 sowie ein Teil dieser Bits zur Adressierung des Schwellwertspeichers 22 verwendet.

Die Adressieranordnung 20', die wieder von einem Taktsignal CP gesteuert wird, liefert nach der Erzeugung jeweils aller Adressen der Bildpunkte eines Feldes ein Signal auf der Leitung 17, das den vom Vergleicher 24 zu diesem Zeitpunkt auf der Ausgangsleitung 25 abgegebenen binären Wert in den Ausgangsspeicher 26 an der adressierten Stelle einschreibt. Der Vergleicher 24 vergleicht die vom Zähler 12 erreichte Zählerstellung, die über die Verbindung 15 abgegeben wird, mit dem aus dem Schwellwertspeicher 22 ausgelesenen Schwellwert. Mit dem Signal auf der Leitung 17 wird nach dem Einschreiben des Vergleichsergebnisses in den Ausgangsspeicher 26 auch der Zähler 12 wieder auf die Anfangsstellung zurückgesetzt.

Nach der vollständigen Adressierung und Verarbeitung aller Bildpunkte im Speicher 10 enthält der Ausgangsspeicher 26 wieder alle Punkte des verkleinerten Pseudo-Halbtonbildes, die wieder über die Leitung 27 einer nicht dargestellten Ausgabeanordnung zugeführt werden können.

Wenn eine weitere Verkleinerung erforderlich ist, indem in vorher beschriebener Weise nicht alle Felder der Matrix der Bildpunkte im Speicher 10 verwendet werden, kann dies bei einem Auslassen von Feldern in beispielsweise jeder zweiten Reihe und Spalte der Matrix im Speicher 10 dadurch erfolgen, daß nicht alle Adreßeingänge des Speichers 10 über die Verbindung 13' angesteuert werden, sondern entsprechende Adresseneingänge auf einem festen Potential gehalten werden, wie dies für den Zwischenspeicher 16 in der Anordnung nach Fig. 5 bereits erläutert wurde. Bei einer anderen Folge auszulassender Felder kann in die Verbindung 13' vor den Adresseneingängen des Speichers 10 ein (nicht dargestellter) Zuordner eingeschaltet werden, der dem Zuordner 30 in der Anordnung nach Fig. 5 entspricht.

Es ist klar, daß bei den Anordnungen nach Fig. 4 bis 6 der Ausgangsspeicher 26 wegfallen kann, wenn die am Ausgang 25 des Vergleichers 24 erzeugten binären Werte unmittelbar in der erzeugten Folge zur Steuerung einer Bildausgabeanordnung verwendet werden können.

## Ansprüche

1. Verfahren zur Umwandlung eines ersten Musters, das aus einer ersten Matrix von binären Musterelementen besteht, in ein zweites Muster mit geringerer Auflösung in Form einer zweiten Matrix mit weniger binären Musterelementen als die erste Matrix, wobei die erste Matrix in aneinandergrenzende Felder unterteilt wird und die Anzahl Musterelemente des einen binären Werts in jedem Feld gezählt und jeder Zählwert mit einem Schwellwert verglichen wird,
dadurch gekennzeichnet, daß die Schwellwerte für jeweils eine erste Anzahl benachbarter Felder unterschiedlich sind.

2. Verfahren nach Anspruch 1,
dadurch gekennzeichnet, daß aus der ersten Anzahl Felder eine zweite Anzahl kleiner als die erste Anzahl Zwischenwerte gebildet werden und daß das zweite Muster aus den zweiten Zwischenwerten gebildet wird.

3. Verfahren nach Anspruch 2,
dadurch gekennzeichnet, daß jeder Zwischenwert aus einem der Zählwerte gemäß einer vorgegebenen Folge der Felder ausgewählt wird.

4. Verfahren nach einem der Ansprüche 1 bis 3,
dadurch gekennzeichnet, daß die erste Anzahl und gegebenenfalls die zweite Anzahl abhängig von der gewünschten Auflösungsverringerung gewählt wird.

5. Anordnung zur Durchführung des Verfahrens nach einem der Ansprüche 1 bis 4 mit einem Zähler, der die Anzahl Musterelemente des einen Werts für jeweils ein Feld der ersten Matrix zählt und dabei einen Zählwert bildet, und mit einem Vergleicher, der jeden Zählwert mit einem Schwellwert vergleicht,
dadurch gekennzeichnet, daß ein Schwellwert-Speicher (22) zur Speicherung der unterschiedlichen Schwellwerte und eine Adressiervorrichtung (20) vorgesehen sind, die für jeden Zählwert jeweils der ersten Anzahl benachbarter Felder einen anderen Schwellwert aus dem Schwellwertspeicher (22) ausliest und dem Vergleicher (24) zuführt.

6. Anordnung nach Anspruch 5, dadurch gekennzeichnet, daß ein Zwischenspeicher (24) vorgesehen ist, der alle Zählwerte aufnimmt, und daß die Adressiervorrichtung (20) außerdem die Zählwerte jeweils der ersten Anzahl benachbarter Felder im Zwischenspeicher adressiert und dem Vergleicher (24) zuführt.

7. Anordnung nach Anspruch 6, dadurch gekennzeichnet, daß die Adressiervorrichtung (20) nur einen Teil der Zählwerte adressiert und dem Vergleicher (24) zuführt.

8. Anordnung nach Anspruch 5, dadurch gekennzeichnet, daß die Adressiervorrichtung (20) außerdem die Zufuhr der Musterelementwerte der ersten Matrix zum Zähler (12) steuert und der Ausgang des Zählers (12) direkt mit dem Vergleicher (24) gekoppelt ist.

Fig.1

Fig.2

Fig.3

Fig.4

Fig.5

Fig.6